# EUROPEAN PATENT APPLICATION

(11) **EP 4 610 905 A1**
(43) Date of publication of application: **03.09.2025**
(21) Application number: 24382209.5
(22) Date of filing: 27.02.2024
(51) Int. Cl.: G06Q 10/0631, B64D 45/00, G06N 20/00, G06N 5/025

(54) **METHOD AND SYSTEM FOR CHARACTERIZING ALERTS AND PREDICTING TRANSACTIONS TO RESOLVE AN ALERT**

(71) Applicant: The Boeing Company, Arlington, VA 22202 (US)
(72) Inventor: MUÑOZ HERNÁNDEZ, Andrés, 28042 Madrid (ES); HULTBERG, Daniel, 41103 Gothenburg (SE); GUSTAFSSON, Bernt Tomas, 401 23 Gothenburg (SE); DOMINGUEZ, Maria Del Pozo, 63263 Neu-Isenburg (DE); VEGA ASTORGA, Rubén, 28042 Madrid (ES); DAMASCHKE, Thekla, 401 23 Gothenburg (SE); GÜEMES JIMENEZ, Alejandro, 28909 Getafe (ES); GRÖNKVIST, Åke Mattias, 41103 Gothenburg (SE)
(74) Representative: ZBM Patents - Zea, Barlocci & Markvardsen

(57) **Abstract**

A method includes retrieving historical flight operator data associated with operation of an aircraft fleet. The method also includes performing classification operations to generate a first dataset, wherein the first dataset includes a set of alerts and sets of transactions for each alert. The method also includes analyzing the first dataset to determine association rules and entity relationship rules. The method also includes applying the association rules and the entity relationship rules to the first dataset to generate a second dataset. The method also includes determining a strategy to be used to solve an alert based on the second dataset.

## Description

### FIELD OF THE DISCLOSURE

The present disclosure is generally related to characterizing alerts and predicting transactions to resolve an alert.

### BACKGROUND

The airline industry applies operations research methods and tools for the planning and scheduling of resources. Optimization-based decision support systems enable efficient and cost effective scheduling of aircraft and crew, and enable handling of short-term rescheduling problems where modifications to initial plans are required before final schedules can be executed.

On each day of operation, planned crew and aircraft schedules can become infeasible due to external situations and internal situations. The external situations and internal situations are identified by the optimization-based decision support systems as alerts. To date, no planning tools have been able to cope with the complexity of characterizing alerts and providing transactions to resolve the alerts. Despite the increasing power of hardware and sophisticated solution methods, there is still a gap between the reality faced in airlines' operations control and the decision support offered by the systems targeting the recovery of aircraft, crew, and passenger itineraries in one integrated system.

Accordingly, there is a need for a method and system configured to characterize alerts and to predict a transaction to resolve an alert.

### SUMMARY

In a particular implementation, a method includes retrieving historical flight operator data associated with operation of an aircraft fleet. The method includes performing classification operations to generate a first dataset. The first dataset includes a set of alerts and sets of transactions for each alert. The method includes analyzing the first dataset to determine association rules and entity relationship rules. The method includes applying the association rules and the entity relationship rules to the first dataset to generate a second dataset. The method also includes determining a strategy to be used to solve an alert based on the second dataset.

In a particular implementation, a system includes one or more memories storing computer-executable instructions, and one or more processors. The one or more processors are configured to execute the computer-executable instructions to retrieve historical flight operator data associated with operation of an aircraft fleet. The one or more processors are configured to execute the instructions to perform classification operations to generate a first dataset. The first dataset includes a set of alerts and sets of transactions for each alert. The one or more processors are configured to execute the instructions to analyze the first dataset to determine association rules and entity relationship rules. The one or more processors are configured to execute the instructions to apply the association rules and the entity relationship rules to the first dataset to generate a second dataset. The one or more processors are also configured to execute the instructions to determine a strategy to be used to solve an alert.

In another particular implementation, a method includes determining an alert has occurred. The method includes determining, using a first machine learning model, that a manual transaction should be performed. The method includes determining, using a second machine learning model, a type of strategy to be used to solve the alert. The method includes determining, using a third machine learning model, one or more transactions associated with the type of strategy to be used to solve the alert. The method also includes sending the one or more transactions associated with the type of strategy to be used to solve the alert to a device.

In another particular implementation, a device includes means for retrieving historical flight operator data associated with operation of an aircraft fleet. The device includes means for performing classification operations to generate a first dataset. The first dataset includes a set of alerts and sets of transactions for each alert. The device includes means for analyzing the first dataset to determine association rules and entity relationship rules. The device includes means for applying the association rules and the entity relationship rules to the first dataset to generate a second dataset. The device also includes means for determining a strategy to be used to solve an alert based on the second dataset.

In another particular implementation, a device includes means for determining an alert has occurred. The device includes means for determining, using a first machine learning model, that a manual transaction should be performed. The device includes means for determining, using a second machine learning model, a type of strategy to be used to solve the alert. The device includes means for determining, using a third machine learning model, one or more transactions associated with the type of strategy to be used to solve the alert. The device also includes means for sending the one or more transactions associated with the type of strategy to be used to solve the alert to a device.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a diagram that illustrates a system configured to process data to characterize alerts and predict transactions to resolve an alert.
FIG. 2 is a diagram of a particular implementation of predictive analysis decision-support system for an alert.
FIG. 3 is a flow chart of a method of characterizing alerts.
FIG. 4 is a flow chart of a method of predicting transactions to resolve an alert.
FIG. 5 is a block diagram of a computing environment including a computing device configured to support aspects of computer-implemented methods and computer-executable program instructions (or code) according to the present disclosure.

### DETAILED DESCRIPTION

One of the main tasks for operators in an airline's Operations Control Center (OCC) is to manage assignments of crew members and aircraft in order to execute a planned flight schedule. Disruptions affecting crew schedule (e.g., disruption due to working hour limitations for pilots, cabin crews, or both), aircraft schedule (e.g., disruptions due to delays or aircraft capabilities), or both, in operational phases must be dealt with quickly and efficiently in order to minimize impact on customers and to eliminate or limit deviations from the planned flight schedule. For that purpose, airlines use multiple tools for managing and tracking operations. These tools provide multiple features that give situational awareness and alerts about disruptions in the schedules and violations of operational rules established by the airline. The effects of these disruptions on applicable rosters and schedules are currently resolved manually by one or more individuals without necessarily taking into account previous solutions to similar types of disruptions and/or taking into account possible additional disruptions that may be created based on the solution selected to resolve the current disruption.

Accordingly, there is a need for a system that generates data that characterizes the disruptions or alerts and the solutions or transactions to resolve them, which will enable the system to infer from the data how individuals deal with crew and/or fleet management issues stemming from disruptive events or alerts.

Aspects disclosed herein present systems and methods for characterizing alerts and predicting transactions to resolve an alert. The system uses historical flight operator data associated with operation of an aircraft fleet and performs data mining techniques on the historical flight operator data. For example, association rule mining can be used, in order to characterize the transactions most frequently applied by an operator in order to solve an alert that causes an operational conflict in the schedules and/or crew rosters. The system can also use entity relationship rules which matches rules between an operational conflict and the applied transaction strategies, so that the common information between them (e.g., what resource is affected by the alert and what resource has its schedule or roster modified by the applied transaction) has a match. Application of associated rule mining and entity relationship rules allows for generation of a noise reduced dataset (e.g., a filtered dataset) that removes residual or noisy information from both elements that may be exogenous to the core information to be analyzed.

After the noise reduced dataset has been generated, the system can use a descriptive analysis module that infers patterns incurred by airline operators, and a predictive analysis module that uses machine learning to generate one or more transactions for an alert. The system is configured to determine that an alert has occurred. The predictive analysis module then determines, using a first machine learning model, that a manual transaction should be performed. The predictive module then determines, using a second machine learning model, a type of strategy to be used to solve the alert. The type of strategy selected may be based on the type of alert and the time between when the alert is detected and when the alert will take place. The predictive module then determines, using a third machine learning model, one or more transactions associated with the type of strategy to be used to solve the alert. After the predictive analysis module has determined the one or more transaction, the system sends it to a device associated with an operator to implement the one or more transactions.

The techniques and systems described herein provide the technical advantage of leveraging datasets containing airline disruption management information (e.g., previous alerts and transactions to resolve those alerts) from an analytical perspective. The described data mining techniques characterize the strategies and transactions most frequently applied by operators in order to solve alerts that cause operational conflicts in the aircraft schedules and/or crew rosters. The procedures described herein allow for building a dataset that removes the noise stemming from the transactional nature of the original databases. This enables the constitution of the main building block of an analytical framework, which can be approached from different perspectives. A descriptive analysis module, as described herein, infers patterns incurred by airline operators, and a predictive analysis module, as described herein, is an entry point to a decision support service that reduces the workload of the operators. The predictive analysis module is configured to build predictive models capable of providing strategies and transactions to resolve alerts based on the actions observed in previous behavior of operators. These predictive models may serve as a support for decision points in workflow of operators when performing disruption management tasks (e.g., resolving one or more alerts).

The figures and the following description illustrate specific exemplary implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific implementations or examples described below, but by the claims and their equivalents.

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number.

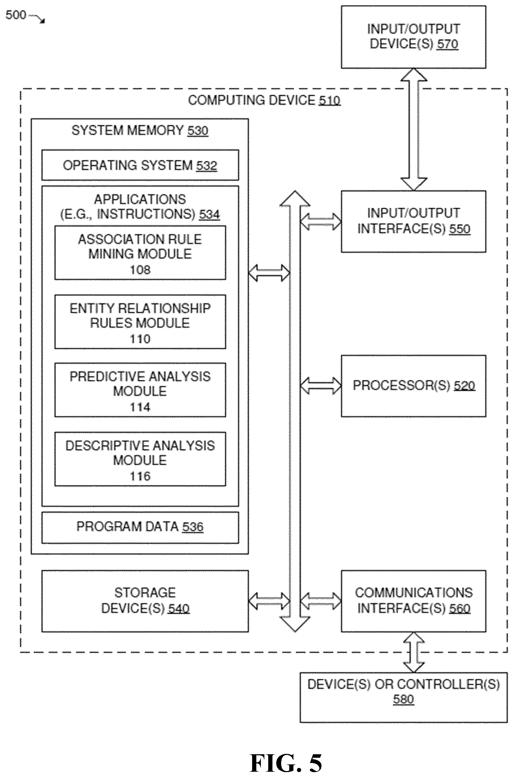

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 5 depicts a computing device 510 including one or more processors ("processor(s)" 520 in FIG. 5), which indicates that in some implementations the computing device 510 includes a single processor 520 and in other implementations the computing device 510 includes multiple processors 520. For ease of reference herein, such features are generally introduced as "one or more" features and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

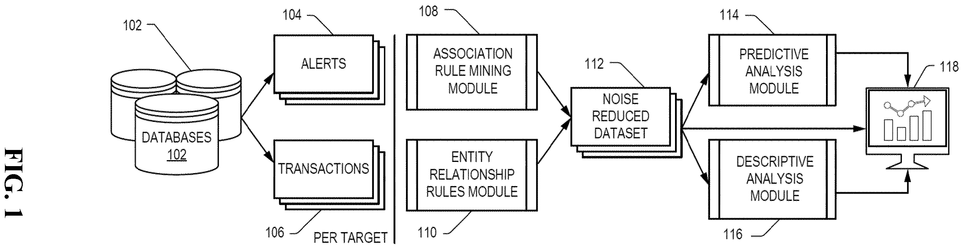

FIG. 1 depicts an example of a system 100 that is configured to characterize alerts and predict transactions to resolve an alert. The system 100 includes databases 102. The databases 102 include historical flight operator data associated with operation of an aircraft fleet. The system 100 is configured to perform classification operations on the flight operator data to generate a first dataset. The first dataset includes a set of alerts 104 and sets of transactions 106 that resolves individual alerts 104. Each alert 104 in the set of alerts can be associated with an aircraft or with a crew that is associated with the aircraft. In addition, each alert 104 in the set of alerts includes a first attribute or a first characteristic and each transaction 106 in the set of transactions includes a second attribute or a second characteristic. The first attribute or the first characteristic can include information about the operational violation that was incurred in the schedule or roster of an individual resource of an airline (i.e., aircraft and/or crew member). The second attribute or the second characteristic can include information that indicates one or more actions that were performed to resolve the alert 104. For example, the one or more actions performed can include a modification to a conflicting schedule or crew roster for an identified airline resource.

Once the first dataset is generated, an association rule mining module 108 is configured to analyze the first dataset to determine association rules and apply the association rules to the first dataset to generate a noise reduced dataset 112 (i.e., a second dataset). The association rule mining module 108 can be configured to use machine learning models to analyze the first dataset from the databases 102 to identify frequent if-then associations (i.e., association rules). An association rule has two parts: an antecedent (if) and a consequent (then). An antecedent is an item found within the first dataset. A consequent is an item found in combination with the antecedent. For example, the association rule mining module 108 can identify that when alert A (i.e., antecedent) occurs the operator performs or implements transaction F (i.e., consequent).

The association rule mining module 108 is configured to determine the strength of a given association rule. The strength of a given associated rule is measured by two main parameters: support and confidence. Support refers to how often a given rule appears in the first dataset of the database 102. Confidence refers to the amount of times a given rule turns out to be true in practice. A rule may show a strong correlation in the first dataset because it appears very often but may occur far less when applied. This would be a case of high support, but low confidence. Conversely, a rule might not particularly stand out in the first dataset, but continued analysis shows that it occurs very frequently. This would be a case of high confidence and low support. The association rule mining module 108 uses these measures to separate causation from correlation to generate the noise reduced dataset 112 (i.e., the second dataset). In some implementations, the association rule mining module 108 is configured to use a third value parameter, such as a lift value. The lift value is a ratio of confidence to support. For example, when the lift value is a negative value, then there is a negative correlation between datapoints, when the value is positive, there is a positive correlation, and when the ratio equals 1, then there is no correlation. The association rule mining module 108 may use the lift value when generating the noise reduced dataset 112.

An entity relationship rules module 110 is configured to analyze the first dataset to determine entity relationship rules and apply the entity relationship rules to the first dataset to generate the noise reduced dataset 112 (i.e., the second dataset). The entity relationship rules module 110 uses the entity relationship rules to match rules between an alert or operational conflict and the transaction to resolve the alert, so that common information between them (e.g., what resource is affected by the alert and what resource has its schedule or crew roster modified by the transaction selected by the operator) has a match. This data mining technique of using the entity relationship rules enables the entity relationship rules module 110 to remove residual or noisy information from the first dataset (i.e., removing one or more alerts from the set of alerts and one or more transactions from the set of transactions based on the association rules and entity relationship rules) to generate the noise reduced dataset 112 (i.e., the second dataset). Each transaction 106 in the noise reduced dataset 112 (i.e., the second dataset) corresponds to a transaction or an operation to resolve a corresponding alert 104. The transaction 106 or operation includes a modification to a conflicting aircraft fleet schedule or crew roster associated with a particular aircraft. Each alert 104 in the noise reduced dataset 112 (i.e., the second dataset) is associated with an aircraft or a crew that is associated with the aircraft.

A technical advantage of using both data mining techniques is that the noise reduced dataset 112 is provided as output. The noise reduced dataset 112 constitutes all filtered observations from the first dataset regarding the alerts solved by operators and the transactions to solve them that were implemented with statistical significance. All information from the first dataset that may not be relevant is therefore removed, which enables the system 100 to establish the desired analysis framework.

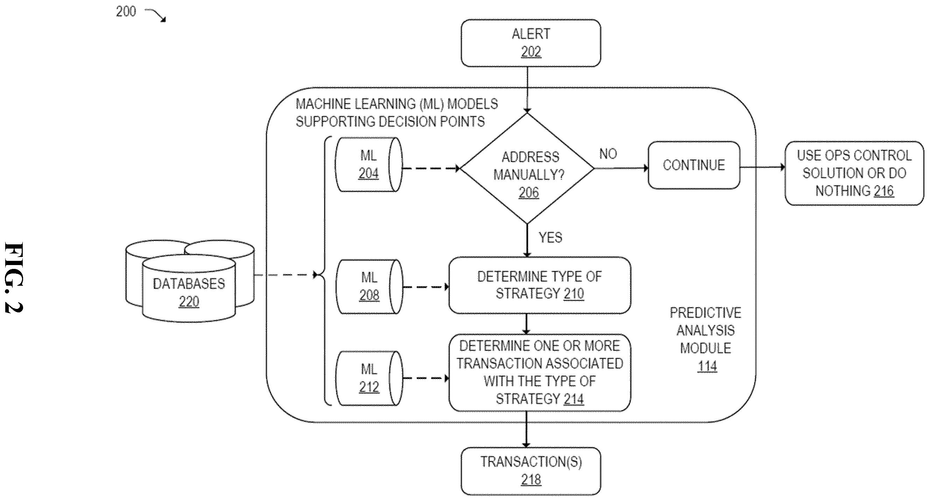

The system 100 further analyzes the noise reduced dataset 112 (i.e., the second dataset) using a predictive analysis module 114 and a descriptive analysis module 116. The predictive analysis module 114, as described in more detail in FIG. 2, uses machine learning models configured to determine a strategy to be used to solve an alert based on the noise reduced dataset 112 (i.e., the second dataset). In some implementations, the machine learning models are configured to estimate what strategies or transactions will be employed to solve future alerts based on previously selected strategies and transactions in the noise reduced dataset 112. The predictive analysis module 114 then sends to a display device 118 to display a strategy or list of strategies and the associated transactions to those strategies to solve the alert 104.

The descriptive analysis module 116 summarizes and presents key features of the noise reduced dataset 112. The descriptive analysis module 116 provides a clear and concise overview of key characteristics, patterns, and trends within the data to be displayed on a user interface of the display device 118. The descriptive analysis module 116 may use the following techniques and aspects: locations associated with alerts (e.g., airports), measure of central tendency, measure of dispersion, frequency distribution, summary statistics, graphical representation, narrative summaries, or a combination thereof. The measure of central tendency involves calculating and presenting measures of central tendency, such as the mean (average), median (middle value), and mode (most frequently occurring value). These measures give an indication of the central or typical value in the noise reduced dataset 112. The measure of dispersion provides information about a spread of variably of the noise reduced dataset 112, such as a range variance, standard deviation, or a combination thereof. The measure of dispersion may be configured to provide an understanding of how individual data points deviate from a central tendency. The frequency distribution includes creating and analyzing frequency distributions. This involves counting the occurrences of different values or ranges of values in a dataset. In some implementations, histograms and bar charts may be used as graphical representations of frequency distributions. Summary statistics can include various summary statistics, such as quartiles and percentiles. These statistics can be used to describe the distribution of data points and identify key values that divide the noise reduced dataset 112 into segments. Graphical representation can include scatter plots, box plots, and pie charts, to help in presenting the noise reduced dataset 112 visually, making it easier to grasp patterns and trends. Narrative summaries include written or verbal descriptions of key findings and patterns within the noise reduced dataset 112. This can provide context and insights that may not be immediately apparent from the statistics alone.

The technical advantages of using descriptive analysis include an ability to summarize and display on the display device 118 the noise reduced dataset 112 in a meaningful way, providing a foundation for further analysis, hypothesis generation, and operator decision-making.

FIG. 2 is a diagram of a particular implementation of predictive analysis decision-support system 200 for an alert 202. The predictive analysis decision-support system 200 includes the predictive analysis module 114. The predictive analysis decision-support system 200, the predictive analysis module 114, or an operator determines that the alert 202 has occurred. The predictive analysis module 114 obtains from databases 220, the noise reduced dataset 112 for the purpose of using the noise reduced dataset 112 to determine whether a transaction 106 is to be applied.

The predictive analysis module 114 includes individual machine learning (ML) models for supporting one or more decision points. For example, the predictive analysis module 114, at decision block 206, determines, using a first ML model 204, whether a manual transaction should be performed. When the predictive analysis module 114 determines that the manual transaction should not be performed then the process continues to block 216, which outputs to the operator to use an operations (OPS) control solution or do nothing. Possible reasons for the first ML model 204 to determine that no manual transaction should be performed include an alert 202 that is instantaneous because an OPS Control tool has non-updated information (e.g., a connection time alert is generated because OPS Control has not yet received the landing message for an inbound flight), or the type of strategy for the alert 202 is no transaction.

When the predictive analysis module 114 determines that the manual transaction should be performed then the process continues to block 210. At block 210, the predictive analysis module 114 determines, using a second ML model 208, a type of strategy to be used to solve the alert 202. The type of strategy selected can be based on a first attribute or a first characteristic of the alert 202 and a time between when the alert 202 was determined and when a situation associated with the alert 202 will take place. The second ML model 208 determines the first attribute or the first characteristic based on the noise reduced dataset 112. Based on the first attribute or the first characteristic, the second ML model 208 can determine the type of strategy that corresponds to the first attribute or the first characteristic.

The process continues to block 214 where a third ML model 212 determines one or more transactions 106 associated with the type of strategy. This determination may be driven by the temporal and spatial frame of the alert 202 and by the strategy determined at block 210. The final output of this process, at block 218, may consist of the indication of the type of strategy and the one or more transactions 106 associated with that strategy to be enforced manually by the operator, in the case in which a manual action should be applied.

For example, the alert 202 may be generated before a first flight of a day for an aircraft that includes one or more entries in a minimum equipment list that indicates that the aircraft cannot be used to land at a particular destination airport on a third flight of the day for the aircraft due to predicted weather conditions at the particular destination airport. The ML 204 determines that the alert 202 should be addressed manually and the ML 208 determines that a tail swap strategy should be used to address the alert 202. The ML 212 determines that the transactions 106, at the departure airport of a second flight or the third flight, are implementation of a tail swap procedure for another aircraft that is able to land at the particular destination airport of the third flight, and provides the information associated with the tail swap procedure as the transactions 218.

The technical advantages of the predictive analysis decision-support system 200 includes providing insights into future trends, behaviors, or outcomes based on historical data (i.e., the noise reduced dataset 112). This enables operators to anticipate and prepare for future alerts and make informed transaction decisions. In addition, the operators can rely on data-driven insights rather than intuition alone. This leads to more informed and objective decision-making processes for which transactions should be performed to resolve an alert. Additionally, operators are able to optimize resource allocation, such as aircraft assignments or crew scheduling. Furthermore, the predictive analysis module 114, the first ML model 204, the second ML model 208, and the third ML model 212 can be continuously updated and improved with new data (i.e., updated noise reduced dataset 112). This adaptability allows these models to refine themselves over time, ensuring that recommended transactions and decisions remain accurate and relevant.

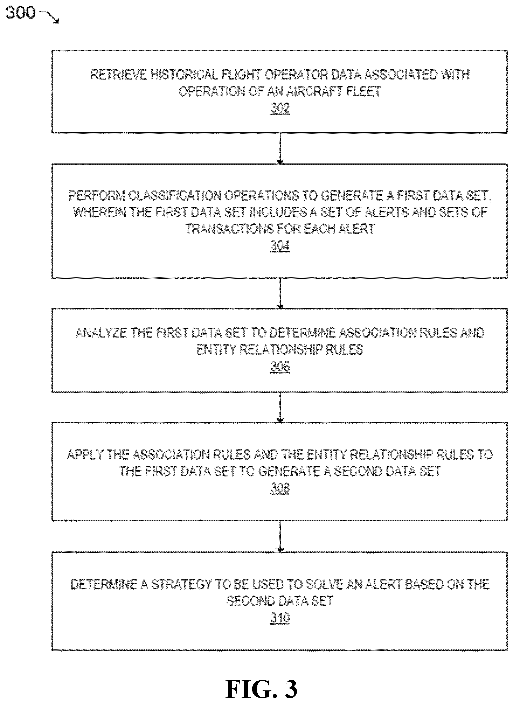

FIG. 3 is a flow chart of a method of 300 characterizing alerts. The method 300 includes, at block 302, retrieving historical flight operator data associated with operation of an aircraft fleet for a particular time period (e.g., one month, three months, one year, or some other time period). The historical flight operator data may be stored in the databases 102. For example, a first database of the databases 102 may include historical data associated with crew member changes for an airline, and a second database of the databases 102 may include historical data associated with aircraft schedule changes for the airline.

The method 300 includes, at block 304, performing classification operations to generate a first dataset, wherein the first dataset includes a set of alerts 104 and sets of transactions 106 for each alert 104. Each alert 104 in the set of alerts can be associated with an aircraft or with a crew that is associated with the aircraft. In addition, each alert 104 in the set of alerts includes a first attribute or a first characteristic and each transaction 106 in the set of transactions includes a second attribute or a second characteristic. The first attribute or the first characteristic can include information about the operational violation that was incurred in the schedule or roster of an individual resource of an airline (i.e., aircraft and/or crew member). The second attribute or the second characteristic can include information that indicates one or more actions that were performed to resolve the alert 104. For example, the one or more actions performed can include a modification to a conflicting schedule or crew roster for an identified airline resource.

The method 300 includes, at block 306, analyzing the first dataset to determine association rules and entity relationship rules. Once the first dataset is generated, an association rule mining module 108 is configured to analyze the first dataset to determine association rules and apply the association rules to the first dataset to generate a noise reduced dataset 112 (i.e., a second dataset). The association rule mining module 108 can be configured to use machine learning models to analyze the first dataset from the database 102 to identify frequent if-then associations (i.e., association rules). The association rule has two parts: an antecedent (if) and a consequent (then). An antecedent is an item found within the first dataset. A consequent is an item found in combination with the antecedent. For example, the association rule mining module 108 can identify that when alert A (i.e., antecedent) occurs the operator performs or implements transaction F (i.e., consequent).

The entity relationship rules module 110 is configured to analyze the first dataset to determine entity relationship rules and apply the entity relationship rules to the first dataset to generate the noise reduced dataset 112 (i.e., the second dataset). The entity relationship rules module 110 uses the entity relationship rules to match rules between an alert or operational conflict and the transaction to resolve the alert, so that common information between them (e.g., what resource is affected by the alert and what resource has its schedule or crew roster modified by the transaction selected by the operator) has a match.

The method 300 includes, at block 308, applying the association rules and the entity relationship rules to the first dataset to generate a second dataset. The data mining techniques, as described above, enable the entity relationship rules module 110 to remove residual or noisy information from the first dataset (i.e., removing one or more alerts from the set of alerts and one or more transactions from the set of transactions based on the association rules and entity relationship rules) to generate the noise reduced dataset 112 (i.e., the second dataset). Each transaction 106 in the noise reduced dataset 112 (i.e., the second dataset) corresponds to a transaction or an operation to resolve a corresponding alert 104. The transaction 106 or operation includes a modification to a conflicting aircraft fleet schedule or crew roster associated with a particular aircraft. Each alert 104 in the noise reduced dataset 112 (i.e., the second dataset) is associated with an aircraft or a crew that is associated with the aircraft.

The method 300 also includes, at block 310, determining a strategy to be used to solve an alert based on the second dataset. The predictive analysis module 114 is used to determine the strategy. The predictive analysis module 114 uses machine learning models configured to determine the strategy to be used to solve an alert based on the noise reduced dataset 112 (i.e., the second dataset). In some implementations, the machine learning models are configured to estimate what strategies or transactions will be employed to solve future alerts based on previously selected strategies and transactions in the noise reduced dataset 112. The predictive analysis module 114 then sends output to the display device 118 to display the strategy or list of strategies and the associated transactions to those strategies to solve the alert 104.

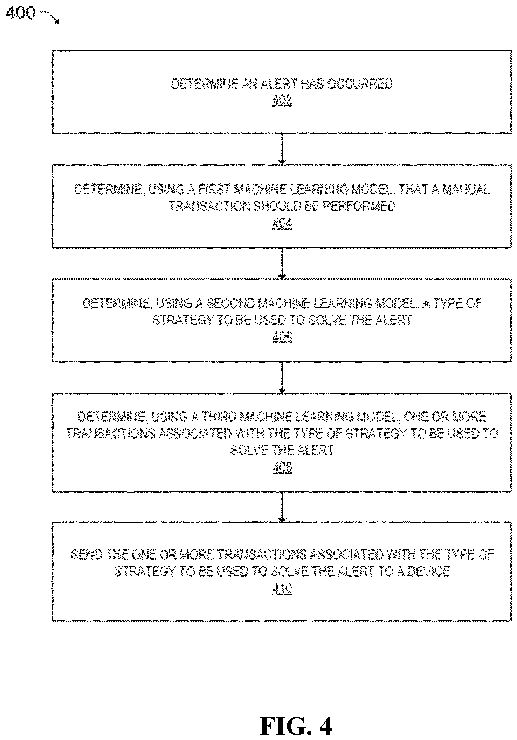

FIG. 4 is a flow chart of a method 400 of predicting transactions to resolve an alert 202. The method 400 includes, at block 402, determining an alert 202 has occurred. The predictive analysis decision-support system 200, the predictive analysis module 114, or an operator may determine that the alert 202 has occurred.

The method 400 includes, at block 404, determining, using a first machine learning model 204, that a manual transaction should be performed. In some implementations, the first ML model 204 determines that the manual transaction should not be performed, and the first ML model 204 sends output to the display device 118 to display to the operator instructions to use an OPS control solution or do nothing. Possible reasons for the first ML model 204 to determine that no manual transaction should be perform include an alert 202 that is instantaneous because an OPS Control tool has non-updated information (e.g., a connection time alert is generated because OPS Control has not received yet the landing message for an inbound flight), or the type of strategy for the alert 202 is no transaction.

The method 400 includes, at block 406, determining, using a second machine learning model 208, a type of strategy to be used to solve the alert 202. The type of strategy selected can be based on a first attribute or a first characteristic of the alert 202 and the time between when the alert 202 was determined and when the alert 202 will take place. The second ML model 208 determines the first attribute or the first characteristic based on the noise reduced dataset 112. Based on the first attribute or the first characteristic, the second ML model 208 can determine the type of strategy that corresponds to the first attribute or the first characteristic.

The method 400 includes, at block 408, determining, using a third machine learning model 212, one or more transactions associated with the type of strategy to be used to solve the alert 202. This determination may be driven by the temporal and spatial frame of the alert 202 and by the strategy determined at block 406. The method 400 also includes, at block 410, sending the one or more transactions associated with the type of strategy to be used to solve the alert 202 to a device.

FIG. 5 is a block diagram of a computing environment 500 including a computing device 510 configured to support aspects of computer-implemented methods and computer-executable program instructions (or code) according to the present disclosure. For example, the computing device 510, or portions thereof, is configured to execute instructions to initiate, perform, or control one or more operations described with reference to FIGS. 1-4.

The computing device 510 includes one or more processors 520. The processor(s) 520 are configured to communicate with system memory 530, one or more storage devices 540, one or more input/output interfaces 550, one or more communications interfaces 560, or any combination thereof. The system memory 530 includes volatile memory devices (e.g., random access memory (RAM) devices), nonvolatile memory devices (e.g., read-only memory (ROM) devices, programmable read-only memory, and flash memory), or both. The system memory 530 stores an operating system 532, which may include a basic input/output system for booting the computing device 510 as well as a full operating system to enable the computing device 510 to interact with users, other programs, and other devices. The system memory 530 stores system program data 536, such as any data used or generated by the system 100, the predictive analysis decision-support system 200, one or more modules, one or more machine learning models, or a combination thereof, as described with reference to FIGS. 1-4.

The system memory 530 includes one or more applications 534 (e.g., sets of instructions) executable by the processor(s) 520. As an example, the one or more applications 534 include instructions executable by the processor(s) 520 to initiate, control, or perform one or more operations described with reference to FIGS. 1-4. To illustrate, the one or more applications 534 include instructions executable by the processor(s) 520 to initiate, control, or perform one or more operations described with reference to the association rule mining module 108, the entity relationship rules module 110, the predictive analysis module 114, the descriptive analysis module 116, or a combination thereof.

In a particular implementation, the system memory 530 includes a non-transitory, computer readable medium storing the instructions that, when executed by the processor(s) 520, cause the processor(s) 520 to initiate, perform, or control operations to aid in characterizing alerts and predicting transactions to resolve an alert. The operations include retrieving historical flight operator data associated with operation of an aircraft fleet, performing classification operations to generate a first dataset, wherein the first dataset includes a set of alerts and sets of transactions for each alert, analyzing the first dataset to determine association rules and entity relationship rules, applying the association rules and the entity relationship rules to the first dataset to generate a second dataset, and determining a strategy to be used to solve an alert based on the second dataset. In some implementations, the operations include determining an alert has occurred, determining, using a first machine learning model, that a manual transaction should be performed, determining, using a second machine learning model, a type of strategy to be used to solve the alert, determining, using a third machine learning model, one or more transactions associated with the type of strategy to be used to solve the alert; and sending the one or more transactions associated with the type of strategy to be used to solve the alert to a device.

The one or more storage devices 540 include nonvolatile storage devices, such as magnetic disks, optical disks, or flash memory devices. In a particular example, the storage devices 540 include both removable and non-removable memory devices. The storage devices 540 are configured to store an operating system, images of operating systems, applications (e.g., one or more of the applications 534), and program data (e.g., the program data 536). In a particular aspect, the system memory 530, the storage devices 540, or both, include tangible computer-readable media. In a particular aspect, one or more of the storage devices 540 are external to the computing device 510.

The one or more input/output interfaces 550 enable the computing device 510 to communicate with one or more input/output devices 570 to facilitate user interaction. For example, the one or more input/output interfaces 550 can include a display interface, an input interface, or both. For example, the input/output interface 550 is adapted to receive input from a user, to receive input from another computing device, or a combination thereof. In some implementations, the input/output interface 550 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 570 includes one or more user interface devices and displays (e.g., display device 118), including some combination of buttons, keyboards, pointing devices, displays, speakers, microphones, touch screens, and other devices.

The processor(s) 520 are configured to communicate with devices or controllers 580 via the one or more communications interfaces 560. For example, the one or more communications interfaces 560 can include a network interface. The devices or controllers 580 can include, for example, the association rule mining module 108, the entity relationship rules module 110, the predictive analysis module 114, the descriptive analysis module 116, one or more other devices, or any combination thereof.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1-5. In some implementations, part, or all of one or more of the operations or methods of FIGS. 1-5 may be implemented by one or more processors (e.g., one or more central processing units (CPUs), one or more graphics processing units (GPUs), one or more digital signal processors (DSPs)) executing instructions, by dedicated hardware circuitry, or any combination thereof.

In conjunction with the described implementations, an apparatus includes means for retrieving historical flight operator data associated with operation of an aircraft fleet for a particular time period (e.g., one month, three months, one year, or some other time period). The historical flight operator data may be stored in the databases 102. In some implementations, a first database of the databases 102 may include historical data associated with crew member changes for an airline, and a second database of the databases 102 may include historical data associated with aircraft schedule changes for the airline. For example, the means for retrieving historical flight operator data associated with operation of an aircraft fleet for a particular time period includes the association rule mining module 108, the entity relationship rules module 110, the computing device 510, the processor(s) 520 of FIGS. 1 and 5, one or more other circuits or components are configured to retrieve historical flight operator data associated with operation of an aircraft fleet for a particular time period.

The device also includes means for performing classification operations to generate a first dataset, wherein the first dataset includes a set of alerts 104 and sets of transactions 106 for each alert 104. For example, the means for performing classification operations to generate a first dataset, wherein the first dataset includes a set of alerts 104 and sets of transactions 106 for each alert 104 includes the association rule mining module 108, the entity relationship rules module 110, the computing device 510, the processor(s) 520 of FIGS. 1 and 5, one or more other circuits or components are configured to perform classification operations to generate a first dataset, wherein the first dataset includes a set of alerts 104 and sets of transactions 106 for each alert 104.

The device also includes means for analyzing the first dataset to determine association rules and entity relationship rules. For example, the means for analyzing the first dataset to determine association rules and entity relationship rules includes the association rule mining module 108, the entity relationship rules module 110, the computing device 510, the processor(s) 520 of FIGS. 1 and 5, one or more other circuits or components are configured to analyze the first dataset to determine association rules and entity relationship rules.

The device also includes means for applying the association rules and the entity relationship rules to the first dataset to generate a second dataset. For example, the means for applying the association rules and the entity relationship rules to the first dataset to generate a second dataset includes the association rule mining module 108, the entity relationship rules module 110, the computing device 510, the processor(s) 520 of FIGS. 1 and 5, one or more other circuits or components are configured to apply the association rules and the entity relationship rules to the first dataset to generate a second dataset.

The device also includes means for determining a strategy to be used to solve an alert based on the second dataset. For example, the means for determining a strategy to be used to solve an alert based on the second dataset includes the predictive analysis module 114, the computing device 510, the processor(s) 520 of FIGS. 1 and 5, one or more other circuits or components are configured to determine a strategy to be used to solve an alert based on the second dataset.

The device also includes means for determining an alert 202 has occurred. For example, the means for determining an alert 202 has occurred includes the predictive analysis module 114, the computing device 510, the processor(s) 520 of FIGS. 1, 2, and 5, one or more other circuits or components are configured to determine an alert 202 has occurred.

The device also includes means for determining, using a first machine learning model 204, that a manual transaction should be performed. For example, the means for determining, using a first machine learning model 204, that a manual transaction should be performed includes the predictive analysis module 114, the first ML model 204, the computing device 510, the processor(s) 520 of FIGS. 1, 2, and 5, one or more other circuits or components are configured to determine, using a first machine learning model 204, that a manual transaction should be performed.

The device also includes means for determining, using a second machine learning model 208, a type of strategy to be used to solve the alert 202. For example, the means for determining, using a second machine learning model 208, a type of strategy to be used to solve the alert 202 includes the predictive analysis module 114, the second ML model 208, the computing device 510, the processor(s) 520 of FIGS. 1, 2, and 5, one or more other circuits or components are configured to determine, using a second machine learning model 208, a type of strategy to be used to solve the alert 202.

The device also includes means for determining, using a third machine learning model 212, one or more transactions associated with the type of strategy to be used to solve the alert 202. For example, the means for determining, using a third machine learning model 212, one or more transactions associated with the type of strategy to be used to solve the alert 202 includes the predictive analysis module 114, the third ML model 212, the computing device 510, the processor(s) 520 of FIGS. 1, 2, and 5, one or more other circuits or components are configured to determine, using a third machine learning model 212, one or more transactions associated with the type of strategy to be used to solve the alert 202.

The device also includes means for sending the one or more transactions associated with the type of strategy to be used to solve the alert 202 to a device. For example, the means for sending the one or more transactions associated with the type of strategy to be used to solve the alert 202 to a device includes the predictive analysis module 114, the processor(s) 520 of FIGS. 1, 2, and 5, one or more other circuits or components are configured to send the one or more transactions associated with the type of strategy to be used to solve the alert 202 to a device.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Particular aspects of the disclosure are described below in sets of interrelated Examples:
According to Example 1, a method includes retrieving historical flight operator data associated with operation of an aircraft fleet; performing classification operations to generate a first dataset, wherein the first dataset includes a set of alerts and sets of transactions for each alert; analyzing the first dataset to determine association rules and entity relationship rules; applying the association rules and the entity relationship rules to the first dataset to generate a second dataset; and determining a strategy to be used to solve an alert based on the second dataset.

Example 2 includes the method of Example 1, wherein said performing classification operations further comprises: determining for each alert in the set of alerts a first attribute or a first characteristic; and determining for each transaction in the set of transactions a second attribute or a second characteristic.

Example 3 includes the method of Example 1 or Example 2, wherein each alert in the second dataset corresponds to an indicator of an operational violation incurred in a schedule or crew roster of a resource of an aircraft.

Example 4 includes the method of Example 3, wherein each transaction in the second dataset corresponds to an operation to resolve a corresponding alert, wherein the operation includes a modification to a conflicting aircraft fleet schedule or crew roster associated with a particular aircraft.

Example 5 includes the method of any of Example 1 to Example 4, wherein each alert in the second dataset is associated with an aircraft.

Example 6 includes the method of any of Example 1 to Example 5, wherein each alert in the second dataset is associated with a crew that is associated with an aircraft.

Example 7 includes the method of any of Example 1 to Example 6, wherein said applying the entity relationship rules further comprises matching one or more rules between an operational conflict and a transaction that was applied to solve the alert.

Example 8 includes the method of any of Example 1 to Example 7, wherein generation of the second dataset further comprises removing one or more alerts from the set of alerts and one or more transactions from the set of transactions based on the association rules and entity relationship rules.

Example 9 includes the method of any of Example 1 to Example 8, wherein said determining the strategy to be used to solve the alert further comprises performing a descriptive analysis to infer a statistical characterization of a schedule or roster management alert faced by a user to determine the strategy.

Example 10 includes the method of any of Example 1 to Example 9, wherein said determining the strategy to be used to solve the alert further comprises determining, using a first machine learning model, that a manual transaction should be performed.

Example 11 includes the method of Example 10 and further includes determining, using a second machine learning model, a type of strategy to be used to solve the alert.

Example 12 includes the method of Example 10 or Example 11 and further includes determining, using a third machine learning model, one or more transactions associated with the type of strategy to be used to solve the alert.

According to Example 13, a system includes one or more memories storing computer-executable instructions; and one or more processors configured to execute the computer-executable instructions to: retrieve historical flight operator data associated with operation of an aircraft fleet; perform classification operations to generate a first dataset, wherein the first dataset includes a set of alerts and sets of transactions for each alert; analyze the first dataset to determine association rules and entity relationship rules; apply the association rules and the entity relationship rules to the first dataset to generate a second dataset; and determine a strategy to be used to solve an alert.

Example 14 includes the system of Example 13, wherein the one or more processors to further execute the computer-executable instructions to determine, using a first machine learning model, that a manual transaction should be performed.

Example 15 includes the system of Example 13 or Example 14, wherein the one or more processors are further configured to execute the computer-executable instructions to determine, using a second machine learning model, a type of strategy to be used to solve the alert.

Example 16 includes the system of Examples 14 or Example 15, wherein the one or more processors are further configured to execute the computer-executable instructions to determine, using a third machine learning model, one or more transactions associated with the type of strategy to be sued to solve the alert.

Example 17 includes the system of any of Example 13 to example 16, wherein each alert in the second dataset corresponds to an indicator of an operational violation that was incurred in a schedule or crew roster of a resource of an aircraft.

Example 18 includes the system of Example 17, wherein each transaction in the second dataset corresponds to an operation to resolve a corresponding alert, and wherein the operation includes a modification to a conflicting aircraft fleet schedule or crew roster associated with a particular aircraft.

Example 19 includes the system of any of Example 13 to Example 18, wherein said perform classification operations includes: determine for each alert in the set of alerts a first attribute or a first characteristic; and determine for each transaction in the set of transactions a second attribute or a second characteristic.

According to Example 20, a method includes determining an alert has occurred; determining, using a first machine learning model, that a manual transaction should be performed; determining, using a second machine learning model, a type of strategy to be used to solve the alert; determining, using a third machine learning model, one or more transactions associated with the type of strategy to be used to solve the alert; and sending the one or more transactions associated with the type of strategy to be used to solve the alert to a device.

## Claims

1. A method for characterizing alerts and predicting transactions to resolve an alert, the method comprising:
retrieving historical flight operator data associated with operation of an aircraft fleet;
performing classification operations to generate a first dataset, wherein the first dataset includes a set of alerts and sets of transactions for each alert;
analyzing the first dataset to determine association rules and entity relationship rules;
applying the association rules and the entity relationship rules to the first dataset to generate a second dataset; and
determining a strategy to be used to solve an alert based on the second dataset.

2. The method of claim 1, wherein said performing classification operations further comprises:
determining for each alert in the set of alerts a first attribute or a first characteristic; and
determining for each transaction in the set of transactions a second attribute or a second characteristic.

3. The method of claim 1 or 2, wherein each alert in the second dataset corresponds to an indicator of an operational violation incurred in a schedule or crew roster of a resource of an aircraft.

4. The method of any of claims 1 to 3, wherein each transaction in the second dataset corresponds to an operation to resolve a corresponding alert, wherein the operation includes a modification to a conflicting aircraft fleet schedule or crew roster associated with a particular aircraft.

5. The method of any of claims 1 to 4, wherein each alert in the second dataset is associated with an aircraft or a crew that is associated with an aircraft.

6. The method of any of claims 1 to 5, wherein the applying the entity relationship rules further comprises matching one or more rules between an operational conflict and a transaction that was applied to solve the alert.

7. The method of any of claims 1 to 6, wherein generation of the second dataset further comprises removing one or more alerts from the set of alerts and one or more transactions from the set of transactions based on the association rules and entity relationship rules.

8. The method of any of claims 1 to 7, wherein said determining the strategy to be used to solve the alert further comprises performing a descriptive analysis to infer a statistical characterization of a schedule or roster management alert faced by a user to determine the strategy.

9. The method of any of claims 1 to 7, wherein said determining the strategy to be used to solve the alert further comprises determining, using a first machine learning model, that a manual transaction should be performed.

10. The method of claim 9, further comprising determining, using a second machine learning model, a type of strategy to be used to solve the alert.

11. The method of claim 10, further comprising determining, using a third machine learning model, one or more transactions associated with the type of strategy to be used to solve the alert.

12. A data processing system for characterizing alerts and predicting transactions to resolve an alert, the system comprising a processor configured to perform the steps of the method of any of claims 1 to 11.

13. A computer program product comprising instructions which, when the program is executed by a computer, cause the computer to carry out the steps of the method of any of claims 1 to 11.

14. A computer-readable storage medium comprising instructions which, when executed by a computer, cause the computer to carry out the steps of the method of any of claims 1 to 11.

15. A computer-readable data carrier having stored thereon the computer program product of claim 13.
